# EUROPEAN PATENT SPECIFICATION

(11) **EP 4 112 393 B1**
(45) Date of publication and mention of the grant of the patent: **30.04.2025**
(21) Application number: 21761702.6
(22) Date of filing: 22.01.2021
(51) Int. Cl.: B60R 21/201, B60R 21/207

(54) **SIDE AIRBAG DEVICE AND AIRBAG MODULE MANUFACTURING METHOD**
SEITENAIRBAGVORRICHTUNG UND VERFAHREN ZUR HERSTELLUNG EINES AIRBAGMODULS
COUSSIN DE SÉCURITÉ GONFLABLE LATÉRAL ET PROCÉDÉ DE FABRICATION DE MODULE DE COUSSIN DE SÉCURITÉ GONFLABLE

(30) Priority: 26.02.2020 JP 2020030291
(43) Date of publication of application: 04.01.2023
(73) Proprietor: Autoliv Development AB, 44783 Vargarda (SE)
(72) Inventor: TAMURA, Yusuke, Yokohama-shi, Kanagawa 222-8580 (JP); TAGUCHI, Hiroyuki, Yokohama-shi, Kanagawa 222-8580 (JP); SATO, Suguru, Yokohama-shi, Kanagawa 222-8580 (JP)
(74) Representative: Müller Verweyen
(86) International application number: PCT/JP2021/002172
(87) International publication number: WO 2021/171847

(56) References cited:
- WO-A1-2018/228831
- JP-A- 2001 130 364
- JP-A- 2001 151 064
- JP-A- 2001 158 320
- JP-A- 2002 067 853
- JP-A- 2007 030 616
- JP-A- 2008 168 673
- JP-A- 2009 286 339
- JP-A- 2014 184 939
- JP-A- H11 321 509
- US-A- 5 498 023
- US-A1- 2012 068 443

## Description

### TECHNICAL FIELD

The present invention relates to a side airbag device and a manufacturing method of an airbag module constituting a side airbag device installed in a vehicle seat in a vehicle cabin in order to protect an occupant, for example, when a vehicle is impacted from a side (hereinafter referred to as a side impact). In particular, the present invention relates to a side airbag device containing an airbag module having a soft cover wound around an outer periphery thereof, and a manufacturing method of the airbag module.

As used in this application, "up" and "upper" refer to the head direction of an occupant seated in a normal position in the seat, and "down" and "lower" refer to the foot direction of the same occupant. In addition, "front" and "forward" refer to the frontward direction of an occupant seated in a normal position in the seat, and "rear" and "rearward" refer to the back direction of the same occupant. Moreover, the "width direction" means the directions toward the left hand and right hand of an occupant seated in a normal position in the seat. Note that a "normal position" in the description above refers to a position along which the entire back of the occupant is in contact with the backrest of the seat at a center position in the width direction of the seat cushion that constitutes the seat. Furthermore, "occupant" in the above description assumes an AM50 (a 50th percentile of an adult male in US) of World SID (Word Side Impact Dummy).

### BACKGROUND ART

For example, upon a side impact, a side airbag device that suppresses movement of the occupant toward the part where the impact is applied is configured such that a signal transmitted by a sensor that detects the impact activates an inflator so as to generate gas in order to expand and deploy a cushion to the side of the occupant seated in a vehicle seat.

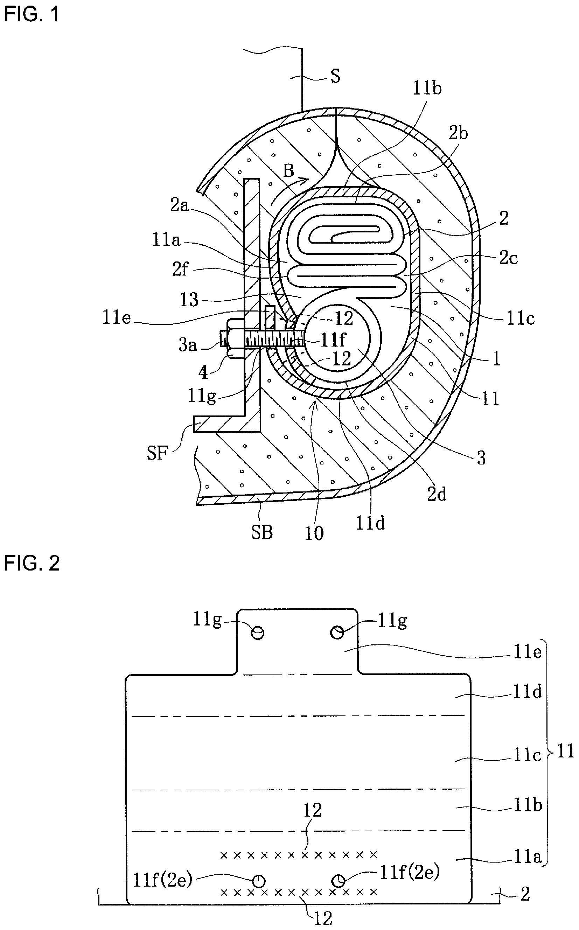

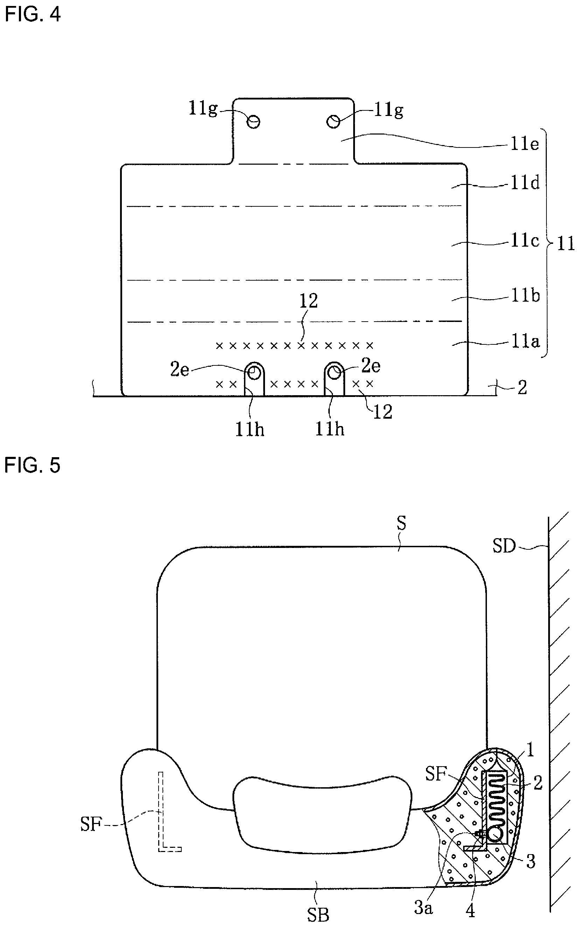

The side airbag device is, as illustrated in FIG. 5, for example, a cushion 2 with an inflator 3 stowed therein that is stowed inside a side part of the backrest portion (hereinafter seatback SB) of a seat S in a state of being folded in a bellows shape in front-to-back direction of the vehicle. Note that, in FIG. 5, 1 represents the airbag module having the inflator 3 stowed in the cushion 2, 3a represents a stud bolt, for example two thereof, provided in a protruding state in the longitudinal direction on the outer periphery of the inflator 3, and 4 represents a nut to attach to the stud bolt 3a. In addition, SF indicates a side frame built in both left and right sides of the seat back SB, and SD indicates a side door.

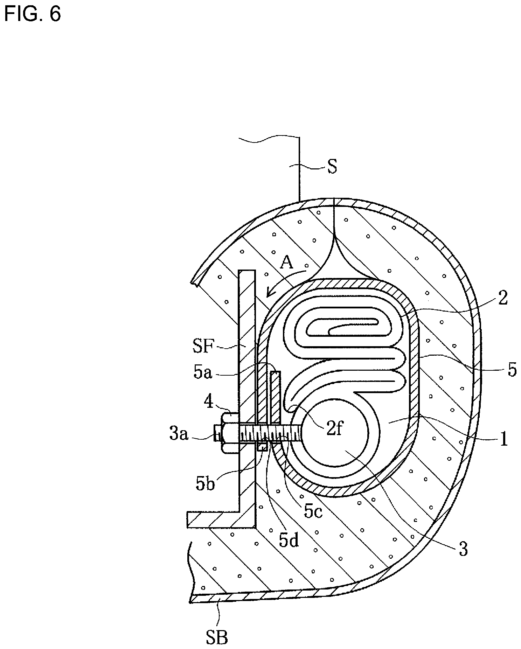

In order to maintain the folded state of the cushion while the side airbag device is being assembled, being transported to a vehicle manufacturer, being assembled to a vehicle, and during standard usage of a vehicle, as illustrated in FIG. 6, a soft cover 5 is wound around an outer peripheral portion of the airbag module 1.

A hole 5c provided in a first end 5a of the soft cover 5 is mated and engaged with the stud bolt 3a of the inflator 3. Thereafter, a second end 5b is wound from the side the inflator 3 is stowed in so as to surround the folded side of the cushion 2, and mating a hole 5d provided on the second end 5b to the stud bolt 3a of the inflator 3 enables the soft cover 5 to be wound around the airbag module 1.

However, in the case of the winding of the soft cover 5, when the airbag module 1 is assembled to a vehicle, a folded part 2f on the seat side in proximity to the inflator 3 is caught between a side frame SF and the inflator stowing portion of the cushion 2 due to the tensile force (arrow A). In this case, damage occurs to the portion of the cushion 2 that is caught.

Therefore, a technique for resolving the disadvantages has been proposed in Patent Document 1. The technology proposed in Patent Document 1 includes, as illustrated in FIG. 7, a protective flap 6 arranged on the side frame SF side of the airbag module 1 that includes the folded part 2f on the seat side of the cushion 2 in proximity to the inflator 3. Note that the protective flap 6 is provided with a hole 6a for inserting the stud bolt 3a of the inflator 3 and is sewn to the soft cover 5 and the cushion 2 so there is no deviation in placement position.

### Prior Art Documents

### Patent Documents

Patent Document 1 U.S. Patent Application Publication No. 2015/0123382 Specification, Patent Document 2 JP 20011-130364A

### SUMMARY OF THE INVENTION

### PROBLEM TO BE SOLVED BY THE INVENTION

However, in the case of the technology proposed in Patent Document 1, the protective flap can effectively prevent the cushion from getting caught, but there is a disadvantage that the protective wrap is additionally required, and this increases the number of steps for manufacturing of the airbag module. In addition, there is concern that the cushion getting caught may occur due to manufacturing variations. In Patent Document 2 it is further disclosed a side airbag comprising the features of the preamble of claim 1.

A problem to be solved by the present invention is that the cushion may get caught between the side frame and the inflator stowing portion when assembling the airbag module with the soft cover wound around the outer periphery to a vehicle.

On the other hand, in the case of the side airbag device proposed in Patent Document 1, the cushion getting caught can be effectively prevented, but the protective wrap is additionally required, and the number of assembly steps of the airbag module increases. In addition, the cushion getting caught may occur due to manufacturing variations.

An object of the present invention is to effectively prevent the cushion from getting caught without requiring an extra component besides the soft cover when assembling the airbag module to a vehicle.

### MEANS TO SOLVE THE PROBLEM

The present invention is a side airbag device for suppressing movement of an occupant in a vehicle collision and protecting the occupant provided with an airbag module having an inflator stowed in a cushion attached to a frame of a seat.

In the side airbag device of the present invention, a soft cover is wound around the outer periphery of the airbag module.

Furthermore, with the present invention,
an important feature is that the soft cover includes:
a first side part extending from the stowing portion of the inflator in the cushion along the side surface of the folded cushion on the frame side toward the front of the vehicle,
a front end part extending continuously from a front end of the first side part and wound around the end part of the cushion towards the front of the vehicle,
a second side part extending continuously from the front end part along a side surface of the cushion on the side opposite the frame and extending toward the rear of the vehicle,
a rear end part extending continuously from the second side part and wound around a rear end part of the cushion towards the rear of the vehicle, and
an engaging part extending continuously from the rear end part and overlapping with a portion of the first side part and engaged to a stud bolt of the inflator wherein a space is included between the folded portion of the first side part side of the soft cover close to the inflator and the inflator stowing portion.

With the airbag module constituting the side airbag device according to the present invention,
a protrusion hole in the inflator stowing portion of the cushion for the stud bolt is aligned with the insertion part of the stud bolt provided on the first side portion of the soft cover,
the soft cover is attached to the cushion,
the inflator is stowed in the cushion,
the cushion is folded,
the soft cover is wound, with a first side thereof covering the side surface of the cushion on the frame side, a front end part thereof covering around the end part of the cushion toward the front of the vehicle, a second side part thereof covering the side surface of the cushion on the side opposite the frame, and a rear end part thereof covering the end part of the cushion toward the rear of the vehicle, and
the engaging part engages with the inflator stud bolt and overlaps a portion of the first side part.
This is a manufacturing method of the airbag module of the present invention.

In the present invention, when attaching the airbag module to the frame of the seat, the folded portion of the cushion on the frame side close to the inflator is pulled away from the attachment portion of the inflator to the frame by the tensile force acting on the soft cover. Therefore, effectively preventing the folded portion of the cushion from being caught between the frame and the inflator stowed in the cushion.

In the present invention, the first side part of the soft cover should have a sewn portion sewn to the cushion near the stowing portion of the inflator of the cushion or have an insertion hole for the stud bolt of the inflator. Because in the case of such a configuration, when attaching the airbag module to the frame, the folded portion of the cushion on the frame side close to the inflator is pulled away from the attachment portion of the inflator to the frame by the first side part of the soft cover.

According to the present invention, there is a space between the folded portion on the first side part of the soft cover which is the frame side close to the inflator, and the stowing portion of the inflator. This is because, when attaching the airbag module to the frame, even a portion of the folded cushion is likely to be caught between the frame and inflator stowing portion of the cushion, a portion thereof moves due to the presence of the space, and may avoid getting caught.

### EFFECT OF THE INVENTION

With the present invention, when attaching the airbag module to the seat frame, the folded portion of the cushion on the frame side in proximity to the inflator is pulled away from the portion where the inflator attaches to the frame. Therefore, the folded portion can be effectively prevented from being caught between the frame and the inflator stowing portion of the cushion.

### BRIEF DESCRIPTION OF THE DRAWINGS

FIG. 1 is a cross-sectional view illustrating a state of an airbag module constituting a side airbag device of the present invention attached to a side frame;
FIG. 2 is an expanded view of a soft cover constituting the airbag module of the side airbag device of the present invention;
FIG. 3 is a cross-sectional view illustrating a state of another example of an airbag module constituting a side airbag device of the present invention attached to a side frame;
FIG. 4 is an expanded view of another example of the soft cover constituting the airbag module of the side airbag device of the present invention;
FIG. 5 is a partial cross-sectional view of an airbag module constituting a conventional side airbag device attached to a side frame, viewed from a horizontal direction;
FIG. 6 is a cross-sectional view illustrating the airbag module constituting the conventional side airbag device attached to a side frame; and
FIG. 7 is a cross-sectional view illustrating an airbag module constituting a side airbag device proposed in Patent Document 1 attached to a side frame.

### DESCRIPTION OF THE PREFERRED EMBODIMENTS

An object of the present invention is to prevent a cushion from getting caught without requiring an extra component in addition to a soft cover when assembling an airbag module to a vehicle.

The object of the present invention is achieved by winding the soft cover that is wrapped around the airbag module from a frame and an inflator stowing portion of the cushion along a side surface of the cushion frame to an end part toward the front of the vehicle, then along the side surface of the cushion on the side opposite the frame to an end part toward the rear of the vehicle.

An embodiment of the present invention is described below using the attached diagrams. Note that the explanations of the embodiments below are examples of the present invention, and are not intended to limit the scope of the present invention, the application, and the uses thereof.

As described in FIG. 5, a side airbag device 10 is attached to side frame SF arranged on both the left and right sides of the seat back SB, for example, which functions as a framework of the seat S. In addition, in the Embodiment illustrated in FIG. 1, the side airbag device 10 is attached to the side door SD side of the side frame SF. In the present Embodiment, "seat side" in the following description means the same direction as "frame side".

The side airbag device 10 includes, for example, an airbag module 1 where a cushion 2 in which an inflator 3 is stowed is folded in the front-to-back direction of the vehicle and the folded state is maintained by winding a soft cover 11 around the outer periphery thereof.

The cushion 2 is formed longer in the up-down direction than the front-to-back direction in order to cover an upper body of an occupant from the side, and for example, formed in a bag shape by sewing outer periphery portions of 2 pierces of base material panels together to increase thickness in the left-right direction.

Additionally, the inflator 3 is configured to receive a signal from a sensor and discharge gas into the interior of the cushion 2 from a gas discharge hole provided on the outer surface thereof.

Furthermore, the airbag module 1 is attached to the side frame SF on the side door SD side, for example, using two stud bolts 3a provided at appropriate intervals in a protruding manner in the longitudinal direction of the exterior surface of the inflator 3 opposite the gas discharge hole.

Regarding the side airbag device 10 of the present invention, the form of the soft cover 11 and the manufacturing method of the airbag module differ significantly from that of the side airbag device having the airbag module 1 with a conventional soft cover wound thereon.

In other words, except for an engaging part 11e described below, the soft cover 11 used in the present invention is attached to the side frame SF and has a length in the vertical direction corresponding in general to the length of the cushion 2 in a folded state in the vertical direction of the vehicle. On the other hand, in the front-rear direction of the vehicle in the state where the airbag module 1 is attached to the side frame SF, as illustrated in FIG. 2, the first side part 11a, the front end part 11b, the second side part 11c, the rear end part 11d, and the engaging part 11e are continuously provided from the rear to the front of the vehicle.

The first side part 11a extends from the side frame SF and the inflator 3 stowing portion of the cushion 2 along a side surface 2a of the folded cushion 2 on the frame side (seat side) toward the front of the vehicle and is a portion that covers the side surface 2a. In the Embodiment illustrated in FIG. 2, the insertion hole 11f of the stud bolt 3a of the inflator 3 is provided on the first side part 11a.

In addition, the front end part 11b is a part that extends continuously from the front end of the first side part 11a and covers an end part toward the front of the vehicle 2b of the folded cushion 2 of the airbag module 1 in a state attached to the side frame SF.

In addition, the second side part 11c is a part that extends continuously from the front end part 11b toward the rear of the vehicle along a side surface 2c on a side of the folded cushion 2 of the airbag module 1 on the side opposite that of the frame (side opposite the seat S) and covers the side surface 2c.

In addition, the rear end part 11d is a part that extends continuously from the second side part 11c and covers the end part toward rear end of vehicle 2d of the folded cushion 2 of the airbag module 1 in the attached state.

In addition, the engaging part 11e is a part that extends continuously from the rear end part 11d, overlaps with a portion of the first side part 11a and the outside thereof, and is engaged to the stud bolt 3a of the inflator 2. In the Embodiment illustrated in FIG. 2, an insertion hole 11g for the stud bolt 3a of the inflator 3 is provided in the engagement part.

Note that, as understood from FIG. 2 illustrating the expanded view, the front end part 11b refers to the entire region between the first side part 11a and the second side part 11c, and is positioned on the front surface of the airbag module 1 in a state where the soft cover 11 is wound around the outer periphery of the airbag device 10. Similarly, the rear end part 11d refers to the entire region between the second side part 11c and the engaging part 11e, and is positioned on the rear surface of the airbag module 1 in a state where the soft cover 11 is wound around the outer periphery of the airbag device 10.

The airbag module 1 including the soft cover 11 having the above configuration is assembled and manufactured in the following order. Note that in the present embodiment, "seat side" in the following description means the same direction as "frame side".

First, the protruding hole 2e of the stud bolt 3a provided in the stowing portion where the inflator 3 of the cushion 2 is stowed and the insertion hole 11f provided on the first side part 11a of the soft cover 11 are aligned. Then, in the aligned state, the soft cover 11 is sewn to the cushion 2 on the front end part 11b side of the insertion hole 11f and side opposite the front end part 11b. The reference 12 in FIG. 2 indicates the sewn part of the soft cover 11 and cushion 2. In the present Embodiment, providing at least one sewn part 12 on the each of the insertion holes 11f for the stud bolts 3a in the vehicle front-to-back direction increases the strength of the stitches of the soft cover 11 and cushion 2.

After the inflator 3 is stowed in the cushion 2 with the soft cover 11 sewn to the aforementioned stowing portion, as illustrated in FIG. 1, for example, the cushion 2 main body portion is folded into a bellows shape in the front-back direction of the vehicle, and the leading end is folded into a roll shape.

Next, the first side part 11a, the front end part 11b, the second side part 11c, and the rear end part 11d of the soft cover 11 are wound so as to cover each of the frame side (seat side) surface 2a, the end part toward front end of vehicle 2b, the side surface 2c on the side opposite the frame (side opposite the seat S), and the end part toward rear end of vehicle 2d of the cushion 2.

Thereafter, in a state where the engaging part 11e is overlapped with a portion of the first side part 11a and the outside thereof towards the rear of the vehicle, the stud bolt 3a of the inflator 3 is inserted into the insertion hole 11g provided on the engaging part 11e, and engaged.

When assembling the airbag module 1 in the order above, in the Embodiment of FIG. 1, a space 13 is formed between the frame side close to the inflator 3 of the cushion 2 main body portion, in other words, the folded part 2f of first side part 11a of the soft cover 11, and the stowing portion of the inflator 3.

When the airbag module 1 assembled by the method above is assembled into the side frame SF, the folded part 2f on the frame side of the cushion 2 close to the inflator 3 is pulled in a direction (arrow B) away from the portion of the side frame SF that the inflator 3 is attached to.

Therefore, a portion of the folded part 2f of the cushion 2 can effectively be prevented from being caught between the side frame SF and the inflator 3 stowed in the cushion 2. Even if the folded part 2f getting caught between the side frame SF and the inflator 3 stowing portion of the cushion 2 is likely, a portion thereof moves due to the presence of the space 13, and getting caught is less likely to occur.

### Variation of Embodiment

Needless to say, the present invention is not limited to the examples described above and the Embodiments may be appropriately changed within the scope of the technical concepts described in each claim.

In other words, the side airbag device and the airbag module manufacturing method described above are preferred examples of the present invention, and Embodiments other than these examples are included. Unless particularly limited in the specification of the present application, the shape, size, configuration, arrangement, and the like of the detailed parts illustrated in the accompanying drawings do not restrict the present invention. Furthermore, expressions and terms used in the specification of the present application are for the purpose of description and are not limiting unless otherwise specified.

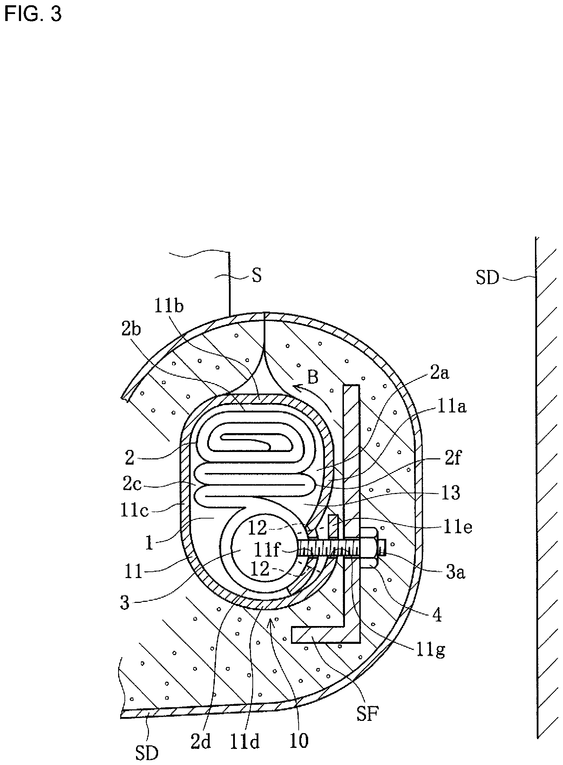

For example, in the embodiment described above, the side airbag device 10 is attached to the side door SD side of the side frame SF, but as illustrated in FIG. 3, the side airbag device 10 may be attached to the side frame SF on the center side in the vehicle width direction. In the case of a modified example of FIG. 3 related to the Embodiment described with left and right inverted and setting the frame side to the first side part 11a and the side opposite side the frame as the second side part 11c, winding the soft cover 11 in the direction of the arrow B in FIG. 3 (opposite direction of the Embodiment described above) enables implementation of the present invention and obtaining the same effect as the effect described above.

For example, in the Embodiment described above, the side airbag device 10 (airbag module 1) of the present invention is provided on a side closer to the side door SD (near side) of the seat S, but may be provided on the center side in the vehicle width direction (far side).

Additionally, in the Embodiment described above, the insertion hole 11f of the stud bolt 3a is provided on the first side part 11a of the soft cover 11, but if the stud bolt 3a can penetrate through the first side part 11a, a cutout 11h as illustrated in FIG. 4 may be provided.

In addition, in the Embodiment described above, the positioning of the soft cover 11 on the cushion 2 is set by the insertion hole 11f for the stud bolt 3a provided on the first side part 11a of the soft cover 11 and the sewn part 12. However, as long as the positioning can be reliably set, employing of only one of the foregoing is feasible. Additionally, the positioning can also be set by adhering the soft cover 11 and the cushion 2.

Additionally, in the Embodiment described above, the length of the soft cover 11 in the up-down direction corresponds generally to the length of the cushion 2 attached to the side frame SF in the folded state in the up-down direction of the vehicle. However, as long as the folded state of the cushion 2 can be maintained during standard use of the vehicle, the length of the soft cover 11 in the up-down direction may be shorter than the length in the up-down direction of the vehicle of the cushion 2 in the folded state.

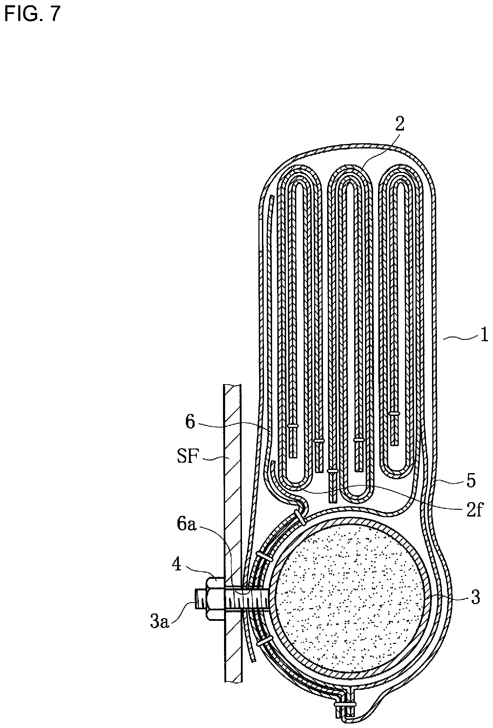

In addition, in the Embodiment described above, the cushion 2 is folded in a bellows shape and a roll shape in the front-rear direction of the vehicle, but may be folded in a bellows shape in the front-rear direction of the vehicle as illustrated in FIG. 5. In addition, as illustrated in FIG. 7, folding in a bellows shape in the width direction of the vehicle is also feasible. Further, folding in a roll shape is also feasible.

In addition, the present invention can also be applied to a self-driving vehicle having a high degree of freedom with respect to the orientation of the seat, such that the orientation of the seat is not fixed in the vehicle travel direction, and can be rotated 180° degrees until facing in the reverse direction of the vehicle travel direction.

In addition, the cushion 2 of the present invention is not limited to being joined by a suitable number of sewn base material panels, and can also be formed by using a technology called one-piece weaving.

### DESCRIPTION OF CODES

1. Airbag module
2. Cushion
2a. Frame side surface
2b. End part toward front end of vehicle
2c. Side surface opposite to frame
2d. End part toward rear end of vehicle
2f. Folded portion
3. Inflator
10. Side airbag device
11. Soft cover
11a. First side part
11b. Front end part
11c. Second side part
11d. Rear end part
11e. Engaging part
11f. Insertion hole
12. Sewn part
13. Space
S. Seat
SF. Side frame

## Claims

1. A side airbag device (10) for suppressing movement of an occupant in a vehicle collision and protecting the occupant, provided with an airbag module (1) having an inflator (3) stowed in a folded cushion (2) attached to a frame of a vehicle seat, comprising:
a soft cover (11) wound around an outer periphery of the airbag module (1); wherein
the soft cover (11) includes:
a first side part (11a) extending from the stowing portion of the inflator (3) in the cushion (2) along the side surface of the folded cushion (2) on the frame side toward the front of the vehicle,
a front end part (11b) extending continuously from a front end of the first side part (11a) and wound around the end part of the cushion (2) towards the front of the vehicle,
a second side part (11c) extending continuously from the front end part (11b) along a side surface of the cushion (2) on the side opposite the frame and extending toward the rear of the vehicle,
a rear end part (11d) extending continuously from the second side part (11c) and wound around a rear end part (2d) of the cushion (2) towards the rear of the vehicle, **characterized by**
an engaging part (11e) extending continuously from the rear end part (11d), overlapping with a portion of the first side part (11a), and engaged to a stud bolt (3a) of the inflator (3) wherein
- a space (13) is included between a folded portion (2F) of the folded cushion (2) and the first side part (11a) side of the soft cover (11) close to the inflator (3) and the inflator stowing portion.

2. The side airbag device (10) according to claim 1, wherein the first side part (11a) includes an insertion hole (11f) of the stud bolt of the inflator (3).

3. The side airbag device (10) according to claim 1 or 2, wherein the first side part (11a) includes a sewn part (12) sewn to the cushion (2) close to the stowing portion of the inflator (3) in the cushion (2).

4. The side airbag device (10) according to claim 3, wherein at least one sewn part (12) is provided on each of the insertion holes (11f) for the stud bolt in the vehicle front-rear direction

5. A method for manufacturing the airbag module (1) constituting the side airbag device (10) according to any one of claims 1 to 4, comprising:
aligning a protrusion hole in the inflator stowing portion of the cushion (2) for the stud bolt and the insertion part of the stud bolt provided on the first side portion of the soft cover (11);
attaching the soft cover (11) to the cushion (2);
stowing the inflator (3) in the cushion (2);
folding the cushion (2);
winding the soft cover (11), a first side (11a) thereof covering the side surface (2a) of the cushion (2) on the frame side, a front end part (11b) thereof covering around the end part (2b) of the cushion (2) toward the front of the vehicle, a second side part (11c) thereof covering the side surface of the cushion (2) on the side opposite the frame, and a rear end part (11d) thereof covering the end part of the cushion (2) toward the rear of the vehicle; and
engaging the engaging part (11e) on the inflator stud bolt overlapping a portion of the first side part (11a).

## Patentansprüche

1. Seitenairbagvorrichtung (10) zum Unterdrücken der Bewegung eines Insassen bei einer Fahrzeugkollision und zum Schützen des Insassen, die mit einem Airbagmodul (1) versehen ist, das einen Gasgenerator (3) aufweist, der in einem gefalteten Kissen (2) verstaut ist, das an einem Rahmen eines Fahrzeugsitzes angebracht ist, umfassend:
eine weiche Abdeckung (11), die um einen Außenumfang des Airbagmoduls (1) gewickelt ist; wobei
wobei die weiche Abdeckung (11) einschließt:
ein erstes Seitenteil (11a), das sich von dem Verstauabschnitt des Gasgenerators (3) in dem Kissen (2) entlang der Seitenoberfläche des gefalteten Kissens (2) auf der Rahmenseite zu der Vorderseite des Fahrzeugs hin erstreckt,
ein vorderes Endteil (11b), das sich von einem vorderen Ende des ersten Seitenteils (11a) kontinuierlich erstreckt und um das Endteil des Kissens (2) zu der Vorderseite des Fahrzeugs hin gewickelt ist,
ein zweites Seitenteil (11c), das sich von dem vorderen Endteil (11b) entlang einer Seitenoberfläche des Kissens (2) auf der Seite, die dem Rahmen gegenüberliegt, kontinuierlich erstreckt und sich zu der Rückseite des Fahrzeugs hin erstreckt,
ein rückseitiges Endteil (11d), das sich von dem zweiten Seitenteil (11c) kontinuierlich erstreckt und um ein rückseitiges Endteil (2d) des Kissens (2) zu der Rückseite des Fahrzeugs gewickelt ist, **gekennzeichnet durch**
ein Eingriffsteil (11e), das sich von dem rückseitigen Endteil (11d) kontinuierlich erstreckt, mit einem Abschnitt des ersten Seitenteils (11a) überlappt und mit einem Stehbolzen (3a) des Gasgenerators (3) in Eingriff steht, wobei
- ein Raum (13) zwischen einem gefalteten Abschnitt (2F) des gefalteten Kissens (2) und der Seite des ersten Seitenteils (11a) der weichen Abdeckung (11) nahe dem Gasgenerator (3) und dem Verstauabschnitt des Gasgenerators eingeschlossen ist.

2. Seitenairbagvorrichtung (10) gemäß Anspruch 1, wobei das erste Seitenteil (11a) ein Einsteckloch (11f) für den Stehbolzen des Gasgenerators (3) einschließt.

3. Seitenairbagvorrichtung (10) nach Anspruch 1 oder 2, wobei das erste Seitenteil (11a) einen genähten Teil (12) einschließt, der an das Kissen (2) nahe dem Verstauabschnitt des Gasgenerators (3) in dem Kissen (2) genäht ist.

4. Seitenairbagvorrichtung (10) nach Anspruch 3, wobei mindestens ein genähtes Teil (12) an jedem der Einstecklöcher (11f) für den Stehbolzen in Fahrzeug-Vorderseite-Rückseite-Richtung bereitgestellt ist

5. Verfahren zum Herstellen des Airbagmoduls (1), das die Seitenairbagvorrichtung (10) nach einem der Ansprüche 1 bis 4 bildet, umfassend:
Ausrichten eines Vorsprungslochs, in dem Abschnitt des Kissens (2), in dem der Gasgenerator verstaut ist, für den Stehbolzen und das Einsteckteil des Stehbolzens, die an dem ersten Seitenabschnitt der weichen Abdeckung (11) bereitgestellt sind;
Anbringen der weichen Abdeckung (11) an das Kissen (2);
Verstauen des Gasgenerators (3) in dem Kissen (2);
Zusammenfalten des Kissens (2);
Aufwickeln der weichen Abdeckung (11), wobei eine erste Seite (11a) davon die Seitenoberfläche (2a) des Kissens (2) auf der Rahmenseite bedeckt, ein vorderes Endteil (11b) davon das Endteil (2b) des Kissens (2) zu der Vorderseite des Fahrzeugs hin abdeckt, ein zweites Seitenteil (11c) davon die Seitenoberfläche des Kissens (2) auf der Seite, die dem Rahmen gegenüberliegt, bedeckt und ein rückseitiges Endteil (11d) davon, das das Endteil des Kissens (2) zu der Rückseite des Fahrzeugs hin bedeckt; und
Eingreifen des Eingriffsteils (11e) an dem Stehbolzen des Gasgenerators, das einen Abschnitt des ersten Seitenteils (11a) überlappt.

## Revendications

1. Dispositif de sac gonflable latéral (10) destiné à supprimer le mouvement d'un occupant lors d'une collision de véhicule et à protéger l'occupant, pourvu d'un module de sac gonflable (1) comportant un gonfleur (3) rangé dans un coussin plié (2) fixé à un châssis d'un siège de véhicule, comprenant :
une enveloppe souple (11) enroulée autour d'une périphérie externe du module de sac gonflable (1) ; dans lequel
l'enveloppe souple (11) comporte :
une première partie latérale (11a) s'étendant à partir de la portion de rangement du gonfleur (3) dans le coussin (2) le long de la surface latérale du coussin plié (2) du côté châssis vers l'avant du véhicule,
une partie d'extrémité avant (11b) s'étendant de manière continue à partir d'une extrémité avant de la première partie latérale (11a) et enroulée autour de la partie d'extrémité du coussin (2) vers l'avant du véhicule,
une seconde partie latérale (11c) s'étendant de manière continue à partir de la partie d'extrémité avant (11b) le long d'une surface latérale du coussin (2) du côté opposé au châssis et s'étendant vers l'arrière du véhicule,
une partie d'extrémité arrière (11d) s'étendant de manière continue à partir de la seconde partie latérale (11c) et enroulée autour d'une partie d'extrémité arrière (2d) du coussin (2) vers l'arrière du véhicule, **caractérisé par**
une partie d'engagement (11e) s'étendant de manière continue à partir de la partie d'extrémité arrière (11d), chevauchant une portion de la première partie latérale (11a), et engagée sur un goujon (3a) du gonfleur (3) dans lequel - un espace (13) est inclus entre une portion pliée (2F) du coussin plié (2) et le côté de première partie latérale (11a) de l'enveloppe souple (11) proche du gonfleur (3) et de la partie de rangement de gonfleur.

2. Dispositif de sac gonflable latéral (10) selon la revendication 1, dans lequel la première partie latérale (11a) comporte un trou d'insertion (11f) du goujon du gonfleur (3).

3. Dispositif de sac gonflable latéral (10) selon la revendication 1 ou 2, dans lequel la première partie latérale (11a) comporte une partie cousue (12) cousue au coussin (2) à proximité de la portion de rangement du gonfleur (3) dans le coussin (2).

4. Dispositif de sac gonflable latéral (10) selon la revendication 3, dans lequel au moins une partie cousue (12) est prévue sur chacun des trous d'insertion (11f) pour le goujon dans la direction avant-arrière du véhicule.

5. Procédé de fabrication du module de sac gonflable (1) constituant le dispositif de sac gonflable latéral (10) selon l'une quelconque des revendications 1 à 4, comprenant :
l'alignement d'un trou en saillie dans la portion de rangement de gonfleur du coussin (2) pour le goujon et de la partie d'insertion du goujon prévue sur la première portion latérale de l'enveloppe souple (11) ;
la fixation de l'enveloppe souple (11) au coussin (2) ;
le rangement du gonfleur (3) dans le coussin (2) ;
le pliage du coussin (2) ;
l'enroulement de l'enveloppe souple (11), un premier côté (11a) de celle-ci recouvrant la surface latérale (2a) du coussin (2) côté châssis, une partie d'extrémité avant (11b) de celle-ci recouvrant la partie d'extrémité (2b) du coussin (2) vers l'avant du véhicule, une seconde partie latérale (11c) de celle-ci recouvrant la surface latérale du coussin (2) du côté opposé au châssis, et une partie d'extrémité arrière (11d) de celle-ci recouvrant la partie d'extrémité du coussin (2) vers l'arrière du véhicule ; et
l'engagement de la partie d'engagement (11e) sur le goujon de gonfleur chevauchant une portion de la première partie latérale (11a).
